# EUROPÄISCHE PATENTSCHRIFT

(11) **EP 2 054 270 B1**
(45) Veröffentlichungstag und Bekanntmachung des Hinweises auf die Patenterteilung: **26.12.2012**
(21) Anmeldenummer: 07801528.6
(22) Anmeldetag: 07.08.2007
(51) Int. Cl.: B60R 11/04, H04N 5/225

(54) **KAMERASYSTEM, INSBESONDERE FÜR EIN UMFELDERFASSUNGSSYSTEM EINES FAHRZEUGS, UND MONTAGEVERFAHREN**
CAMERA SYSTEM, IN PARTICULAR FOR A SYSTEM FOR SENSING THE SURROUNDINGS OF A MOTOR VEHICLE, AND INSTALLATION METHOD
SYSTEME DE CAMERA, NOTAMMENT POUR UN SYSTEME D'ACQUISITION DE L'ENVIRONNEMENT D'UN VEHICULE, ET PROCEDE DE MONTAGE

(30) Priorität: 24.08.2006 DE 102006039654
(43) Veröffentlichungstag der Anmeldung: 06.05.2009
(73) Patentinhaber: Valeo Schalter und Sensoren GmbH, 74321 Bietigheim-Bissingen (DE)
(72) Erfinder: CYWINSKI, Thorsten, 71691 Freiberg (DE); ELMERING, Kai, 74321 Bietigheim-Bissingen (DE); BAUR, Alexander, 86650 Wemding (DE)
(86) Internationale Anmeldenummer: PCT/EP2007/006952
(87) Internationale Veröffentlichungsnummer: WO 2008/022707

(56) Entgegenhaltungen:
- EP-A1- 1 670 240
- EP-A1- 1 890 479
- EP-A2- 1 905 649
- DE-A1-102004 009 920
- DE-A1-102004 043 236
- JP-A- 2002 006 378
- JP-A- 2004 055 959
- US-A- 4 295 721
- US-A1- 2004 223 074
- US-B1- 6 507 700

## Beschreibung

Die Erfindung betrifft ein Kamerasystem, insbesondere für ein Umfelderfassungssystem eines Fahrzeugs, mit einer Optik und mit einem die Optik tragenden und die Optik gegenüber einer einen Bildaufnehmer aufweisenden Leiterplatte ausrichtenden Optikträger. Die Erfindung betrifft außerdem ein Montageverfahren für ein derartiges Kamerasystem.

Ein Kamerasystem entsprechend dem Oberbegriff des Anspruchs 1 ist aus der EP 670 240 A1 bekannt.

Weitere Kamerasysteme sind aus der WO 2005/090127 A1 bekannt geworden. Als problematisch hat sich allerdings der Einbau eines solchen Kamerasystems in ein Gehäuse herausgestellt, da zum einen das Kamerasystem gegenüber der Umgebung dicht in dem Gehäuse angeordnet sein sollte und da zum anderen insbesondere auf die Optik wirkende Kräfte zu einer unerwünschten Verstellung des Fokus gegenüber dem Bildaufnehmer führen können. Zudem ist erwünscht, das Kamerasystem möglichst flexibel aufzubauen, so dass es in verschiedenen Gehäusen, je nach Anwendungsfall, untergebracht werden kann.

Diese Aufgabe wird durch ein Kamerasystem mit den Merkmalen des Anspruchs 1 gelöst. Es ist folglich ein Grundgehäuseteil mit einem Anlagebereich zur Anlage von Anlageabschnitten des Optikträgers vorgesehen, wobei die Leiterplatte samt Optikträger und Optik in axialer Richtung so weit in das Grundgehäuseteil eingeführt ist, dass die Anlageabschnitte an dem Anlagebereich anliegen und wobei der Optikträger im Grundgehäuseteil dauerhaft festgesetzt ist. Dadurch, dass der Optikträger über die Anlageabschnitte am Grundgehäuseteil anliegt, kann erreicht werden, dass die Optik wenigstens weitgehend frei von auf sie wirkenden axialen Kräften innerhalb des Grundgehäuses angeordnet werden kann. Einem unerwünschten Verstellen der relativen Lage der Optik zum Optikträger und damit zum Bildaufnehmer wird folglich entgegengewirkt. Durch ein dauerhaftes Festsetzen des Optikträgers im Grundgehäuseteil wird zudem verhindert, dass der Optikträger zu einem späteren Zeitpunkt seine relative Lage gegenüber dem Grundgehäuseteil verändert. Auch dies gewährleistet eine dauerhafte Funktionssicherheit des Kamerasystems. Zudem wird durch Vorsehen des Anlagebereichs und der Anlageabschnitte eine definierte Lage des Optikträgers, samt der daran angeordneten Optik, im Grundgehäuseteil gewährleistet.

Der Optikträger kann dabei hin zum Grundgehäuseteil abragende Kragen- oder Stegabschnitte aufweisen, deren der Leiterplatte abgewandte Seiten wenigstens abschnittsweise die Anlageabschnitte bilden. Die Anlageabschnitte können folglich von insbesondere nach radial außen gerichteten, umlaufenden Kragenabschnitten gebildet sein. Die Kragenabschnitte können auch als nach radial außen abstehende Füße verwirklicht sein. Ferner kann vorgesehen sein, dass Stegabschnitte vorgesehen sind, die in radialer Richtung, sternförmig um die Mittellängsachse des Optikträgers beziehungsweise der Optik ausgebildet sind. Um ein kippfreies Anliegen des Optikträgers am Anlagebereich des Grundgehäuseteils zu gewährleisten, können insbesondere drei Stegabschnitte vorgesehen sein, die jeweils um 120° bezüglich der Mittellängsachse voneinander beabstandet sind.

Der Anlagebereich kann dabei vorteilhafterweise als auf der Innenseite des Grundgehäuses angeordnet, sich wenigstens abschnittsweise senkrecht zur Mittellängsachse der Optik erstreckende Anlageschultern ausgebildet sein. Hierdurch wird ein definierter Anlagebereich geschaffen, an dem der Optikträger beim axialen Einführen in das Grundgehäuseteil sicher zum Anliegen kommen kann.

Zum dauerhaften Festsetzen des Optikträgers am Grundgehäuseteil ist besonders vorteilhaft, wenn der Optikträger im Bereich seiner Anlageabschnitte unmittelbar am Grundgehäuseteil festgesetzt ist. Insbesondere ein stoffschlüssiges Festsetzen, durch Verwendung eines Klebemittels oder durch Aufschmelzen der aneinanderliegenden Materialbereiche, hat sich als vorteilhaft herausgestellt. Allerdings kommt auch ein form- und/oder kraftschlüssiges Festsetzen in Betracht, insbesondere auch ein An- oder Verschrauben.

Es ist vorgesehen, dass der Optikträger mittels eines unmittelbar oder mittelbar gegen den Optikträger wirkenden Montageteils am Grundgehäuseteil festgesetzt ist. Das Montageteil beaufschlagt dann den Optikträger vorteilhafterweise in axialer Richtung gegen den Anlagebereich des Grundgehäuseteils. Das Montageteil ist dabei vorteilhafterweise unmittelbar am Grundgehäuseteil festgesetzt.

Vorteilhafterweise ist das Montageteil ringartig zur Anlage in radialer Richtung an der Innenseite des Grundgehäuseteils ausgebildet und wirkt auf der dem Optikträger abgewandten Seite gegen die Leiterplatte. Dadurch wird folglich die Leiterplatte samt Optikträger in axialer Richtung gegen das Grundgehäuse beaufschlagt, ohne das axiale Kräfte auf die Optik wirken.

Gemäβ der Erfindung ist das Grundgehäuseteil wenigstens abschnittsweise lasertransparent und der Optikträger und/oder das Montageteil durch Laserschweißen am Grundgehäuseteil festgesetzt.

Um eine spielfreie Anordnung von Optikträger und Leiterplatte im Grundgehäuse zu gewährleisten, kann vorgesehen sein, dass im Grundgehäuseteil Federmittel angeordnet sind, die den Optikträger gegen das Grundgehäuseteil und/oder die Leiterplatte gegen den Optikträger beaufschlagen.

Ein vorteilhaftes Kamerasystem ergibt sich dann, wenn der Optikträger ein erstes Trägerteil zum axialen Aufnehmen der Optik aufweist, wobei die Optik nach einem axialen Einstellen dauerhaft am ersten Trägerteil festgesetzt ist. Durch das axiale Einstellen kann der Fokus optimal auf die Ebene des Bildaufnehmers eingestellt werden. Nachdem der Fokus eingestellt ist, kann die Optik insbesondere stoffschlüssig, beispielsweise durch Verkleben am Trägerteil, festgesetzt sein.

Ferner ist denkbar, dass der Optikträger ein zweites, an der Leiterplatte angeordnetes Trägerteil mit einer parallel zur Leiterplatte verlaufenden Auflagefläche für das erste Trägerteil aufweist, wobei das erste Trägerteil nach einem parallel zur Leiterplatte erfolgten Einstellen dauerhaft am zweiten Trägerteil festgesetzt ist. Durch dieses Einstellen parallel zur Leiterplatte kann der Fokus der Optik zum Bildaufnehmer zentriert werden. Nachdem diese Zentrierung erfolgt ist, wird folglich das erste Trägerteil am zweiten Trägerteil, insbesondere stoffschlüssig, dauerhaft festgesetzt. Als vorteilhaft hat sich hier Laserverschweißen herausgestellt.

Das Grundgehäuseteil als solches weist insbesondere eine von der Optik wenigstens weitgehend verschlossene Optiköffnung auf. Eine Abdeckung der Optik braucht dann nicht vorgesehen werden.

Die Optiköffnung ist dabei vorteilhafterweise auf der gegenüberliegenden Seite einer Einführöffnung des Grundgehäuseteils angeordnet, in welches die Leiterplatte samt Optikträger und Optik eingeführt werden kann. Die Einführöffnung ist im endmontierten Zustand vorteilhafterweise mit einem Deckelteil, das Anschlusskontakte für einen Stecker aufweisen kann, dicht verschlossen.

Dabei ist vorteilhafterweise im Bereich zwischen der Optiköffnung und der Optik ein Dichtring vorgesehen, der in einem von der Optik und dem Grundgehäuse in axialer und radialer Richtung begrenzten Dichtringraum angeordnet ist, wobei die Axialerstreckung des Dichtringraums größer ist als der Durchmesser des Dichtringes und wobei die Radialerstreckung des Dichtringraums kleiner oder gleich ist als der Durchmesser des Dichtringes. Hierdurch wird erreicht, dass ein axiales Einführen der Optik in die Optiköffnung möglich ist, wobei eine Dichtung zwischen Gehäuseteil und Optik aufgrund des Vorsehens des Dichtrings erzielt wird. Durch Vorsehen der entsprechenden Axialerstreckung des Dichtringraums wird ausgeschlossen, dass auf die Optik die Optik verstellende Axialkräfte wirken. Eine Dichtungswirkung wird unabhängig von der axialen Einbautiefe, die von Optik zu Optik verschieden ist, gewährleistet.

Um das Gehäuse in axialer Richtung möglichst schlank zu halten, kann vorgesehen sein, dass im Grundgehäuseteil eine zur ersten Leiterplatte parallele zweite Leiterplatte vorgesehen ist, die über Kontaktierungsmittel mit der ersten Leiterplatte elektrisch verbunden ist. Die Kontaktierungsmittel können dabei insbesondere in axialer Richtung lösbare Stecker sein. Wird ein Montageteil in Form eines Montagerings vorgesehen, so kann dieser Montagering in der Endmontageposition zwischen den beiden Leiterplatten angeordnet sein. Der Montagering dient dann als Abstandhalter zwischen den beiden Leiterplatten und gewährleistet eine parallele positionsgenaue Anordnung.

Zur Kontaktierung der Leiterplatten, und insbesondere der zweiten Leiterplatte, mit einer Stromversorgung, beziehungsweise mit einer Auswerte- oder Steuereinheit, sind insbesondere an der zweiten Leiterplatte Steckerkontakte vorgesehen, die sich durch einen am Grundgehäuseteil angeordneten Deckel erstrecken. Insbesondere kann dabei der Deckel zusammen mit der zweiten Leiterplatte eine eigene Baugruppe bilden, die bei der Montage des Kamerasystems von axial hinten auf das Grundgehäuseteil zum Verschließen des Grundgehäuseteils aufgebracht wird. Die zweite Leiterplatte wird dann, wie bereits erwähnt, mit der ersten Leiterplatte über entsprechend vorgesehene Stecker kontaktiert. Der axiale Abstand zwischen den beiden Leiterplatten kann, wie ebenfalls bereits erwähnt, über das Montageteil vorgegeben werden. Zum dichten Verschließen des Grundgehäuseteils mit dem Deckel kann der Deckel insbesondere stoffschlüssig, durch Kleben oder Aufschmelzen der Materialien, am Grundgehäuseteil angeordnet sein.

Die eingangs genannte Aufgabe wird auch durch ein Montageverfahren nach Anspruch 12 zur Montage eines erfindungsgemäßen Systems nach wenigstens einem der Ansprüche 1-11 gelöst.

Ein derartiges Montageverfahren hat den Vorteil, dass die Vormontageeinheit vor ihrer Montage auf ihre Funktionsfähigkeit geprüft werden kann. Insbesondere die Einstellung der Optik gegenüber der Leiterplatte, beziehungsweise deren Bildaufnehmer, kann vollständig vor Montage erfolgen.

Hierzu ist vorteilhaft, wenn die Optik in einem ersten Trägerteil des Optikträgers in axialer Richtung eingestellt wird und an diesem festgesetzt wird und wenn dann das erste Trägerteil samt Optik auf einem zweiten Trägerteil, welches an der Leiterplatte befestigt ist, parallel zur Leiterplatte eingestellt und an diesem festgesetzt wird. Zunächst wird folglich der Fokus der Optik gegenüber dem Bildaufnehmer eingestellt. Daran anschließend wird der Fokus gegenüber dem Bildaufnehmer zentriert.

Das erfindungsgemäße Montageverfahren hat dabei zudem den Vorteil, dass die Vormontageeinheit in verschiedenartig ausgebildeten Grundgehäuseteilen endmontiert werden kann. Die Grundgehäuseteile können dabei in Abhängigkeit von ihrem späteren Einsatz verschiedenartig ausgebildet sein.

Weitere Vorteile und Einzelheiten der Erfindung sind der nachfolgenden Beschreibung zu entnehmen, anhand derer die in den Figuren dargestellten Ausführungsbeispiele der Erfindung näher beschrieben und erläutert sind.

Es zeigen:
- Figur 1: eine Seitenansicht eines erfindungsgemäßen Kamerasystems;
- Figur 2: einen Längsschnitt durch Figur 1 gemäß der Linie II;
- Figur 3: die Seitenansicht diverser Bauteile einer ersten Ausführungsform eines Kamerasystems; und
- Figur 4: die Seitenansicht mehrerer Bauteile einer zweiten Ausführungsform der Erfindung.

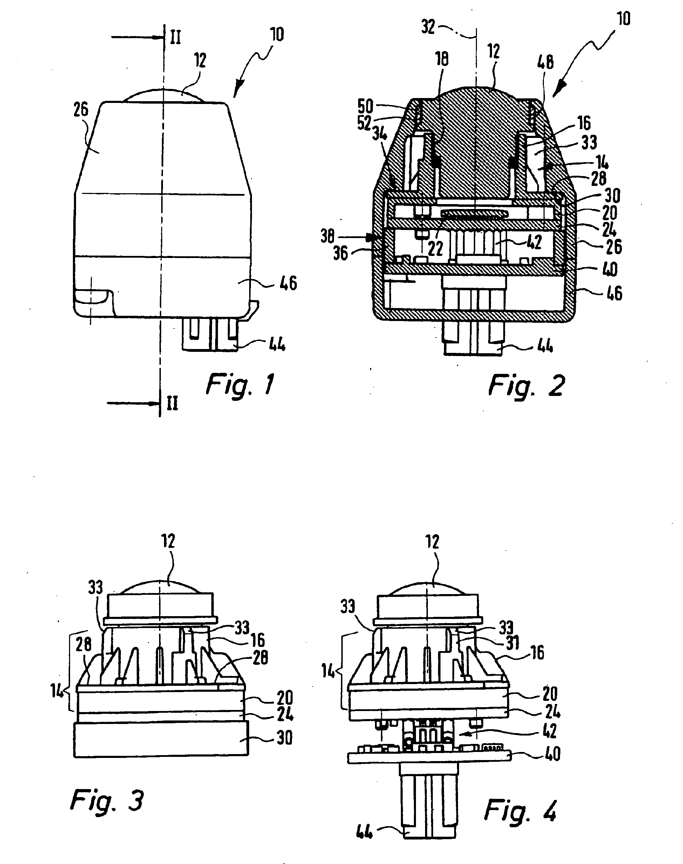

In den Figuren 1 und 2 ist ein erfindungsgemäßes Kamerasystem 10 dargestellt. Das Kamerasystem 10 umfasst dabei eine Optik 12, die in einem Optikträger 14 angeordnet ist. Der Optikträger 14 ist zweiteilig ausgebildet und weist ein erstes Trägerteil 16 auf, das eine sich in axialer Richtung erstreckende Aufnahme 18 für die Optik 12 vorsieht. Das erste Trägerteil 16 ist mit einem rahmenartig ausgebildeten zweiten Trägerteil 20 fest verbunden, das auf einer einen Bildaufnehmer 22 aufweisenden Leiterplatte 24 angeordnet ist. Die eine Vormontageeinheit bildende Leiterplatte 24 samt Optikträger 14 und Optik 12 ist dabei in axialer Richtung in ein Grundgehäuseteil 26 eingeführt und in diesem dauerhaft festgesetzt. Zur definierten axialen Ausrichtung im Grundgehäuseteil 26 weist der Optikträger 14, beziehungsweise dessen erstes Trägerteil 16, Anlageabschnitte 28 auf, die von einem nach radial außen gerichteten Kragenabschnitt gebildet sind. Die Anlageabschnitte 28 liegen an einem im Innern des Grundgehäuseteils 26 vorgesehenen Anlagebereich 30 an. Der Anlagebereich 30 wird dabei von sich wenigstens abschnittsweise senkrecht zur Mittellängsachse 32 erstreckenden Anlageschultern gebildet. Am ersten Trägerteil 16 sind ferner in radialer Richtung abstehende Rippen 31 vorgesehen, deren der Leiterplatte abgewandte Enden Einführschrägen 33 zur Zentrierung des Optikträgers 14 im Grundgehäuse 26 aufweisen.

Zur Montage des Kamerasystems wird die Leiterplatte 24 samt Optikträger 14 und Optik 12 vormontiert. Dazu wird zunächst die Optik 12 in der Aufnahme 18 des Optikträgers 16 in axialer Richtung so weit verstellt, bis der Fokus der Optik 12 in der Ebene des Bildaufnehmers 22 liegt. Zur Axialverstellung der Optik kann diese beispielsweise an ihrem Außenumfang ein Gewinde vorsehen, das mit einem entsprechenden Gewinde der Aufnahme 18 korrespondiert. Durch Verdrehen der Optik kann diese axial eingestellt werden. Ist die optimale Axiallage der Optik erreicht, so kann diese beispielsweise durch Klebemittel dauerhaft am Optikträger 14 festgesetzt werden. In einem nächsten Arbeitsschritt wird die Optik 12 zusammen mit dem ersten Trägerteil 16 parallel zur Leiterplatte 24 auf dem zweiten Trägerteil 20 so eingestellt, dass der Fokus der Optik 12 beziehungsweise deren Mittellängsachse 32 im optischen Zentrum des Bildaufnehmers 22 liegt. Das Trägerteil 20 ist dabei an der Leiterplatte 24 fest angeordnet, beispielsweise durch eine Verschraubung oder Verklebung. Nach einem derartigen Ausrichten der Optik 12 zum Bildaufnehmer 22 wird das erste Trägerteil 16 am zweiten Trägerteil 20 dauerhaft festgesetzt, insbesondere durch Laserschweißen.

Nachdem die Linse 12 mit dem Trägerteil 14 und der Leiterplatte 24 vormontiert ist, kann diese Vormontagegruppe in axialer Richtung in das Grundgehäuseteil 26 so weit eingeführt werden, bis die Anlageabschnitte 28 an dem Anlagebereich 30 zum Anliegen kommen. In einem weiteren Montageschritt wird dann das Optikträgerteil 14 am Grundgehäuseteil 26 dauerhaft festgesetzt, insbesondere durch Laserverschweißen der Anlageabschnitte 28 am Grundgehäuseteil 26. Vorteilhafterweise folgt das Laserschweißen umlaufend im Bereich des Pfeils 34 beziehungsweise in dem Bereich, in dem die Anlageabschnitte 28 am Anlagebereich 30 anliegen. Das Grundgehäuseteil 26 ist dabei aus lasertransparentem Material, so dass ein Aufschmelzen des Materials an den Anlageabschnitten 28 erfolgt.

Nach einer Ausführungsform der Erfindung kann ein ringartiges Montageteil 36 auf der dem Optikträger 14 abgewandten Seite der Leiterplatte 24 vorgesehen sein, das den Optikträger 14 über die Leiterplatte 26 gegen den Anlagebereich 30 beaufschlagt. Zur dauerhaften Festsetzung des Optikträgers 14 kann dann zusätzlich zum Optikträger 14, oder alternativ dazu, das Montageteil 36 mit dem Grundgehäuseteil 26 laserverschweißt werden. Die radial außen liegende Seite des Montageteils 36 liegt dabei wenigstens abschnittsweise umlaufend an der radialen Innenseite des Grundgehäuseteils 26 an. Ein Laserverschweißen kann dabei umlaufend im Bereich des Pfeils 38 erfolgen.

Wie aus der Figur 2 und 4 deutlich wird, ist parallel zur Leiterplatte 24 eine weitere Leiterplatte 40 vorgesehen, auf der weitere elektronische und elektrische Bauteile angeordnet sind. Die Leiterplatte 40 ist dabei über steckerartige Kontaktierungsmittel 42 mit der Leiterplatte 24 lösbar verbunden. An der Leiterplatte 40 sind Steckerkontakte 44 angeordnet, die sich durch einen das Grundgehäuseteil 26 verschließenden Deckel 46 erstrecken. Über die Steckerkontakte 44 kann folglich das Kamerasystem 10 mit Strom versorgt werden beziehungsweise können vom Kamerasystem 10 erfasste Daten an eine Steuer- oder Auswerteeinheit weitergegeben werden. Die Leiterplatte 40 wird vorteilhafterweise mit dem Deckel 46 als eine Baugruppe vormontiert und wird bei der Endmontage derart axial auf die der Optik 12 abgewandten Seite des Grundgehäuses 26 aufgesteckt, dass die Kontaktierungsmittel 42 der beiden Leiterplatten 24 und 40 miteinander in Kontakt treten.

Um eine dauerhafte Kontaktstelle zwischen dem Grundgehäuseteil 26 und dem Deckel 46 zu erreichen, kann das Grundgehäuseteil 26 mit dem Deckel 46 stoffschlüssig verbunden sein.

Wie aus insbesondere Figur 2 deutlich wird, befindet sich die Optik 12 in einer Optiköffnung 48 des Grundgehäuseteils 26, wobei die Optiköffnung 48 von der Optik weitestgehend verschlossen ist. Dazu ist im Bereich zwischen der Optiköffnung 48 und der Optik 12 ein umlaufender Dichtring 50 vorgesehen, der in einem von der Optik 12 und dem Grundgehäuse 26 in axialer und radialer Richtung begrenzten Dichtringraum 52 angeordnet ist. Der Dichtringraum 52 ist dabei so ausgebildet, dass dessen Axialerstreckung um insbesondere das 1,5fache bis 3fache größer ist als der Durchmesser des Dichtrings 50, wobei die Radialerstreckung des Dichtungsraums 52 gleich oder geringfügig kleiner als der Durchmesser des Dichtrings 50 ist. Hierdurch wird erreicht, dass zwar eine ausreichende Abdichtung zwischen Optik 12 und Grundgehäuseteil 26 erreicht wird, allerdings ohne dass dabei größere axiale Kräfte, die zu einem ungewollten Verstellen der Optik 12 gegenüber dem Bildaufnehmer 22 führen, auf die Optik 12 wirken. Dabei ist zu berücksichtigen, dass aufgrund der Bauteiltoleranzen und Toleranzen im Hinblick auf die optischen Eigenschaften der Optik 12 bei einzelnen Kamerasystemen die Optik 12 verschiedene axiale Positionen einnehmen kann. Dennoch kann aufgrund der beschriebenen Ausbildung des Dichtringraums 52 ein dichtes Anordnen der Optik 12 im Grundgehäuseteil 26 gewährleistet werden.

Zur Verdeutlichung des Aufbaus des Kamerasystems ist in der Figur 3 die Vormontageeinheit bestehend aus der Leiterplatte 24, dem Optikträger 14 und der Optik 12 dargestellt. Auf der der Optik 12 abgewandten Seite der Leiterplatte 24 ist das Montageteil 30 angeordnet, welches ebenfalls Bestandteil der Vormontageeinheit sein kann. Das Montageteil 30 kann dazu fest an der Leiterplatte 24 angeordnet sein.

In der Figur 4 sind die Bauteile gemäß Figur 3 dargestellt, allerdings ohne das Montageteil 30. Ferner ist die mit der Leiterplatte 24 versteckte Leiterplatte 40 mit den Steckerkontakten 44 dargestellt.

## Patentansprüche

1. Kamerasystem (10), insbesondere für ein Umfelderfassungssystem eines Fahrzeugs, mit einer Optik (12), mit einem die Optik (12) tragenden und die Optik (12) gegenüber einer einen Bildaufnehmer (22) aufweisenden; Leiterplatte (24) ausrichtenden Optikträger (14), wobei ein Grundgehäuseteil (26) mit einem Anlagebereich (30) zur Anlage von Anlageabschnitten (28) des Optikträgers (14) vorgesehen ist, wobei die Leiterplatte (24) samt Optikträger (14) und Optik (12) in axialer Richtung soweit in das Grundgehäuseteil (26) eingeführt ist, dass die Anlageabschnitte (28) an dem Anlagebereich (30) anliegen und wobei der Optikträger (14) im Grundgehäuseteil (26) dauerhaft festgesetzt ist,
**dadurch gekennzeichnet, dass**
der Optikträger (14) mittels eines unmittelbar oder mittelbar gegen den Optikträger wirkenden Montageteils (36) am Grundgehäuseteil (26) festgesetzt ist,
wobei das Grundgehäuseteil (26) wenigstens abschnittsweise lasertransparent ist, und dass der Optikträger (14) und/oder das Montageteil (36) durch Laserschweißen am Grundgehäuseteil (26) festgesetzt ist.

2. Kamerasystem (10) nach Anspruch 1, **dadurch gekennzeichnet, dass** das Montageteil (36) ringartig zur Anlage in radialer Richtung an der Innenseite des Grundgehäuseteils (26) ausgebildet ist und auf der dem Optikträger (14) abgewandten Seite gegen die Leiterplatte (24) wirkt.

3. Kämerasystem (10) nach Anspruch 1 oder 2, **dadurch gekennzeichnet, dass** der Optikträger (14) nach radial außen ragende Kragen- oder Stegabschnitte aufweist, deren der Leiterplatte (24) abgewandte Seiten wenigstens abschnittsweise die Anlageabschnitte (28) bilden.

4. Kamerasystem (10) nach Anspruch 1, 2 oder 3, **dadurch gekennzeichnet, dass** der Anlagebereich (30) als auf der Innenseite des Grundgehäuses (26) angeordnete, sich wenigstens abschnittsweise senkrecht zur Mittellängsachse der Optik erstreckende Anlageschultern ausgebildet ist.

5. Kamerasystem (10) nach einem der vorhergehenden Ansprüche, **dadurch gekennzeichnet, dass** der Optikträger (14) im Bereich seiner Anlageäbschnitte (28) unmittelbar am Grundgehäuseteil (26) festgesetzt ist.

6. Kamerasystem (20) nach wenigstens einem der vorhergehenden Ansprüche, **dadurch gekennzeichnet, dass** ein den Optikträger (14) gegen das Grundgehäüseteil (26) und/oder die Leiterplatte gegen den Optikträger (14) beaufschlagendes Federmittel vorgesehen sind.

7. Kamerasystem (10) nach wenigstens einem der vorhergehenden Ansprüche, **dadurch gekennzeichnet, dass** der Optikträger (14) ein erstes Trägerteil (16) zum axialen Aufnehmen der Optik (12) aufweist, wobei die Optik (12) nach einem axialen Einstellen dauerhaft am ersten Trägerteil (16) festgesetzt ist.

8. Kamerasystem (10) nach Anspruch 7, **dadurch gekennzeichnet, dass** der Öptikträger (14) ein zweites an der Leiterplatte (24) angeordnetes Trägerteil (20) mit einer parallel zur Leiterplatte (24) verlaufenden Auflagefläche für das erste Trägerteil (16) aufweist, wobei das erste Trägerteil (16) nach einem parallel zur Leiterplatte (24) erfolgten Einstellen dauerhaft am zweiten Trägerteil (20) festgesetzt ist.

9. Kamerasystem (10) nach wenigstens einem der vorhergehenden Ansprüche, **dadurch gekennzeichnet, dass** im Grundgehäuseteil (26) eine zur ersten Leiterplatte (24) parallele zweite Leiterplatte (40) vorgesehen ist, die über Kontaktierungsmittel (42) mit der ersten Leiterplatte (24) elektrisch verbunden ist.

10. Kamerasystem (10) nach Anspruch 9, **dadurch gekennzeichnet, dass** das Montageteil (36) zwischen den beiden Leiterplatten (24, 40) angeordnet ist.

11. Kamerasystem (10) nach Anspruch 9 oder 10, **dadurch gekennzeichnet, dass** an der zweiten Leiterplatte (40) Steckerkontakte (44) vorgesehen sind, die sich durch einen am Grundgehäseteil (26) angeordneten Deckel (46) erstrecken.

12. Montageverfahren zur Montage eines Kamerasystems (10) nach wenigstens einem der vorhergehenden Ansprüche, umfassend die folgenden Schritte:
- Bereitstellen einer Vormontageeinheit umfässend die Optik (12), den Optikträger (14) und die Leiterplatte (24),
- Einführen der Vormontageeinheit in das Grundgehäuseteil (26) derart, dass die Anlageabschhitte (28) des Optikträgers (14) an dem Anlagebereich (30) des Grundgehäuseteils (26) zum Anliegen kommen, und
- dauerhaftes Festsetzen der Vormontageeinheit am Grundgehäuse (26)
wobei der Optikträger (14) mittels des unmittelbar oder mittelbar gegen den Optikträger wirkenden Montageteils (36) am Grundgehäuseteil (26) festsetzbar ist und der Optikträger (14) und/oder das Montageteil (36) durch Laserschweißen am wenigstens teilweise Lasertransparenten Grundgehäuseteil (26) fest gesetzt wird.

13. Verfahren nach Anspruch 12, **dadurch gekennzeichnet, dass** zur Bereitstellung der Vormontageeinheit die Optik (12) zum auf der Leiterplatte (24) angeordneten Bildaufnehmer (22) ausgerichtet wird, wobei die Optik hierzu in einem ersten Trägerteil (16) des Optikträgers (14) in axialer Richtung eingestellt und an diesem festgesetzt wird, und dass das erste Trägerteil (16) samt Optik (12) auf einem zweiten Trägerteil (20), welches an der Leiterplatte (24) befestigt wird, parallel zur Leiterplatte (24) eingestellt und an diesem festgesetzt wird.

## Claims

1. Camera system (10), in particular for a system for sensing the surroundings of a vehicle, having a lens (12), having a lens carrier (14) which bears the lens (12) and which aligns the lens (12) relative to a printed circuit board (24) which has an image sensor (22), wherein a main housing part (26) is provided which has an abutment region (30) for the abutment of abutment portions (28) of the lens carrier (14), wherein the printed circuit board (24) together with lens carrier (14) and lens (12) is inserted into the main housing part (26) in the axial direction to such an extent that the abutment portions (28) bear against the abutment region (30), and wherein the lens carrier (14) is permanently fixed in the main housing part (26),
**characterized in that**
the lens carrier (14) is fixed to the main housing part (26) by means of an assembly part (36) which acts directly or indirectly on the lens carrier, wherein the main housing part (26) is laser-transparent at least in portions, and **in that** the lens carrier (14) and/or the assembly part (36) is fixed to the main housing part (26) by means of laser welding.

2. Camera system (10) according to Claim 1, **characterized in that** the assembly part (36) is of annular form for abutment in the radial direction against the inner side of the main housing part (26), and acts on the printed circuit board (24) on the side facing away from the lens carrier (14).

3. Camera system (10) according to Claim 1 or 2, **characterized in that** the lens carrier (14) has radially outwardly projecting collar or web portions, wherein those sides of the collar or web portions which face away from the printed circuit board (24) form, at least in portions, the abutment portions (28).

4. Camera system (10) according to Claim 1, 2 or 3, **characterized in that** the abutment region (30) is in the form of abutment shoulders which are arranged on the inner side of the main housing (26) and which extend at least in portions perpendicular to the central longitudinal axis of the lens.

5. Camera system (10) according to one of the preceding claims, **characterized in that** the lens carrier (14) is, in the region of its abutment portions (28), fixed directly to the main housing part (26).

6. Camera system (10) according to at least one of the preceding claims, **characterized in that** a spring means is provided which loads the lens carrier (14) against the main housing part (26) and/or the printed circuit board against the lens carrier (14).

7. Camera system (10) according to at least one of the preceding claims, **characterized in that** the lens carrier (14) has a first carrier part (16) for axially receiving the lens (12), wherein the lens (12), after an axial adjustment, is fixed permanently to the first carrier part (16).

8. Camera system (10) according to Claim 7, **characterized in that** the lens carrier (14) has a second carrier part (20), which is arranged on the printed circuit board (24), with an abutment surface, which runs parallel to the printed circuit board (24), for the first carrier part (16), wherein the first carrier part (16), after an adjustment parallel to the printed circuit board (24) has been performed, is fixed permanently to the second carrier part (20).

9. Camera system (10) according to at least one of the preceding claims, **characterized in that**, in the main housing part (26), there is provided a second printed circuit board (40) which is parallel to the first printed circuit board (24) and which is electrically connected to the first printed circuit board (24) via contacting means (42).

10. Camera system (10) according to Claim 9, **characterized in that** the assembly part (36) is arranged between the two printed circuit boards (24, 40).

11. Camera system (10) according to Claim 9 or 10, **characterized in that**, on the second printed circuit board (40), there are provided plug contacts (44) which extend through a cover (46) arranged on the main housing part (26).

12. Assembly method for assembling a camera system (10) according to at least one of the preceding claims, comprising the following steps:
- providing a preassembly unit comprising the lens (12), the lens carrier (14) and the printed circuit board (24),
- inserting the preassembly unit into the main housing part (26) in such a way that the abutment portions (28) of the lens carrier (14) come to bear against the abutment region (30) of the main housing part (26), and
- permanently fixing the preassembly unit to the main housing (26),
wherein the lens carrier (14) can be fixed to the main housing part (26) by means of the assembly part (36) which acts directly or indirectly on the lens carrier, and the lens carrier (14) and/or the assembly part (36) are fixed to the at least partially laser-transparent main housing part (26) by means of laser welding.

13. Method according to Claim 12, **characterized in that**, for the provision of the preassembly unit, the lens (12) is aligned with respect to the image sensor (22) arranged on the printed circuit board (24), wherein for this purpose the lens is adjusted in the axial direction in a first carrier part (16) of the lens carrier (14) and is fixed to said first carrier part, and **in that** the first carrier part (16) together with lens (12) is adjusted, parallel to the printed circuit board (24), on a second carrier part (20) fastened to the printed circuit board (24) and is fixed to said second carrier part.

## Revendications

1. Système de caméra (10), notamment destiné à un système de détection de l'environnement d'un véhicule, comprenant une optique (12), un support d'optique (14) portant l'optique (12) et dirigeant l'optique (12) vers une carte de circuit (24) comportant un capteur d'image (22), dans lequel une partie de boîtier de base (26) est munie d'une zone d'engagement (30) pour l'engagement de sections d'engagement (28) du support d'optique (14), dans lequel la carte de circuit (24), y compris le support d'optique (14) et l'optique (12), est introduite en direction axiale dans la partie de boîtier de base (26) jusqu'à une distance telle que les sections d'engagement (28) s'engagent sur la zone d'engagement (30), et dans lequel le support d'optique (14) est fixé de manière permanente dans la partie de boîtier de base (26),
**caractérisé en ce que** le support d'optique (14) est fixé à la partie de boîtier de base (26) au moyen d'un composant d'assemblage (36) agissant directement ou indirectement sur le support d'optique, dans lequel la partie de boîtier de base (26) est au moins partiellement transparente au laser, et **en ce que** le support d'optique (14) et/ou le composant d'assemblage (36) est fixé par soudage au laser à la partie de boîtier de base (26).

2. Système de caméra (10) selon la revendication 1, **caractérisé en ce que** le composant d'assemblage (36) est réalisé sous forme annulaire pour s'engager en direction radiale sur la face interne de la partie de boîtier de base (26) et **en ce qu'**il agit sur la face opposée au support d'optique (14), contre la carte de circuit (24).

3. Système de caméra (10) selon la revendication 1 ou 2, **caractérisé en ce que** le support d'optique (14) présente des sections de colliers de traverses s'élevant radialement vers l'extérieur, dont les faces opposées à la carte de circuit (24) forment au moins partiellement les sections d'engagement (28).

4. Système de caméra (10) selon la revendication 1, 2 ou 3, **caractérisé en ce que** la zone d'engagement (30) est réalisée sous la forme d'épaulements d'engagement agencés sur la face interne du boîtier de base (26) et s'étendant au moins partiellement perpendiculairement à l'axe longitudinal central de l'optique.

5. Système de caméra (10) selon l'une quelconque des revendications précédentes, **caractérisé en ce que** le support d'optique (14) est directement fixé à la partie de boîtier de base (26) dans la région de sa section d'engagement (28).

6. Système de caméra (10) selon au moins l'une des revendications précédentes, **caractérisé en ce qu'**il est prévu des moyens à ressort sollicitant le support d'optique (14) contre la partie de boîtier de base (26) et/ou sollicitant la carte de circuit contre le support d'optique (14).

7. Système de caméra (10) selon au moins l'une des revendications précédentes, **caractérisé en ce que** le support d'optique (14) comprend une première partie de support (16) destinée à recevoir axialement l'optique (12), dans lequel l'optique (12) est fixée à la première partie de support (16) de manière permanente après un positionnement axial.

8. Système de caméra (10) selon la revendication 7, **caractérisé en ce que** le support d'optique (14) comprend une seconde partie de support (20) disposée sur la carte de circuit (24), comportant une surface d'engagement s'étendant parallèlement à la carte de circuit (24) pour la première partie de support (16), dans lequel la première partie de support (16) est fixée de manière permanente à la seconde partie de support (20) après un positionnement s'effectuant parallèlement à la carte de circuit (24).

9. Système de caméra (10) selon au moins l'une des revendications précédentes, **caractérisé en ce qu'**il est prévu dans la partie de boîtier de base (26) une seconde carte de circuit (40) parallèle à la première carte de circuit (24), qui est électriquement connectée à la première carte de circuit (24) par des moyens de contact (42).

10. Système de caméra (10) selon la revendication 9, **caractérisé en ce que** le composant d'assemblage (36) est disposé entre les deux cartes de circuit (24, 40).

11. Système de caméra (10) selon la revendication 9 ou 10, **caractérisé en ce qu'**il est prévu sur la seconde carte de circuit (40) des contacts mâles (44) qui passent à travers un capot (46) disposé sur la partie de boîtier de base (26).

12. Procédé d'assemblage destiné à l'assemblage d'un système de caméra (10) selon au moins l'une des revendications précédentes, comprenant les étapes suivantes :
- fournir une unité de pré-assemblage comprenant l'optique (12), le support d'optique (14) et la carte de circuit (24),
- introduire l'unité de pré-assemblage dans la partie de boîtier de base (26) de telle manière que les sections d'engagement (28) du support d'optique (14) viennent s'engager sur la zone d'engagement (30) de la partie de boîtier de base (26), et
- fixer de manière permanente l'unité de pré-assemblage au boîtier de base (26),
dans lequel le support d'optique (14) peut être fixé à la partie de boîtier de base (26) au moyen du composant d'assemblage (36) agissant directement ou indirectement sur le support d'optique et le support d'optique (14) et/ou le composant d'assemblage (36) est fixé par soudage au laser à la partie de boîtier de base (26) au moins partiellement transparente au laser.

13. Procédé selon la revendication 12, **caractérisé en ce que**, pour la fourniture de l'unité de pré-assemblage, l'optique (12) est dirigée vers le capteur d'image (22) disposé sur la carte de circuit (24), dans lequel l'optique est à cet effet positionnée en direction axiale dans une première partie de support (16) du support d'optique (14) et est fixée à celle-ci, et **en ce que** la première partie de support (16), y compris l'optique (12), est positionnée sur une seconde partie de support (20) qui est jointe à la carte de circuit (24) parallèlement à la carte de circuit (24), et est fixée à celle-ci.
